# EUROPEAN PATENT SPECIFICATION

(11) **EP 1 865 041 B1**
(45) Date of publication and mention of the grant of the patent: **27.02.2019**
(21) Application number: 06729495.9
(22) Date of filing: 20.03.2006
(51) Int. Cl.: C09J 193/04, C09J 153/02, C08L 53/02

(54) **ADHESION-IMPARTING AGENT AND ADHESION-IMPARTING RESIN EMULSION**
HAFTUNGSVERMITTLER UND HAFTUNGSVERMITTELNDE HARZEMULSION
AGENT ET EMULSION DE RESINE PROMOTEURS D'ADHERENCE

(30) Priority: 30.03.2005 JP 2005096979; 30.03.2005 JP 2005097467
(43) Date of publication of application: 12.12.2007
(73) Proprietor: ARAKAWA CHEMICAL INDUSTRIES, LTD., Osaka-shi, Osaka 541-0046 (JP)
(72) Inventor: MIYAMOTO, Takuro, Osaka-shi, Osaka 538-0053 (JP)
(74) Representative: Vossius & Partner Patentanwälte Rechtsanwälte mbB
(86) International application number: PCT/JP2006/305527
(87) International publication number: WO 2006/109441

(56) References cited:
- EP-A1- 1 498 462
- EP-A1- 1 661 962
- EP-A1- 1 834 728
- WO-A1-03/085060
- WO-A2-03/095514
- JP-A- 04 033 905
- JP-A- 06 088 058
- JP-A- 09 143 430
- JP-A- 11 335 654
- JP-A- 55 054 373
- JP-A- 57 139 156
- JP-A- 60 081 270
- JP-A- 2002 322 450
- JP-A- 2003 327 938
- JP-A- 2010 106 259
- LECHNER M D ET AL: "Makromolekulare Chemie - Ein Lehrbuch für Chemiker, Physiker, Materialwissenschaftler und Verfahrenstechniker" 1 January 1996 (1996-01-01), MAKROMOLEKULARE CHEMIE,, PAGE(S) 295 - 299 , XP002563735 ISBN: 978-3-7643-5343-8 * page 298 *

## Description

### TECHNICAL FIELD

The present invention relates to a tackifier emulsion, and an adherence adhesive composition containing the tackifier and an aqueous adherence adhesive composition obtained by using the tackifier emulsion.

### BACKGROUND ART

Although an adherence adhesive has been widely used for fixing members, respective members must be firmly fixed after adhesion even under various environments, namely holding power must be powerful. However, the adhesion performance of the adherence adhesive is changed depending on the kind of a member being an adhesion objective, and the adherence adhesive having good adhesion performance (such as adhesion and holding power) for all members has been desired.

A tackifier has been often used for the adherence adhesive for improving performance such as adherence, and a rosin tackifier that is one of the tackifiers is widely used for various fields due to the adhesion performance. The rosin tackifier is derived from rosin that is a mixture of various kinds of resin acids, but since a minute amount of low boiling point compounds such as terpenes are contained, it has been often carried out to remove these components by a purification step. Further, the removal of unreacted alcohols has been often carried out in the production of rosin esters obtained by reacting rosins with alcohols (for example, refer to Japanese Unexamined Patent Publication Nos. 5-311137 and 6-329992).
EP 1498462 A1 discloses an acrylic pressure sensitive adhesive and a pressure sensitive adhesive tape, wherein the adhesive has 500 ppm or lower of a volatile component concentration.

By the way, an interest for environmental problems has been recently enhanced and not only the safety of various products but also industrial materials capable of keeping working environment at the production of various products have been desired. For example, conventional organic solvents have been replaced to safe water from the viewpoints of the reduction of environment pollution, safety and health. Both aqueous resins, and resin emulsions in which a resin were emulsified, have been widely used in place of a conventional organic solvent type pressure sensitive adhesive. The present inventors have also proposed an aqueous adherence adhesive composition superior in mechanical stability and heat resistance (Japanese Unexamined Patent Publication No. 7-331208).

However, good adhesion performance is not occasionally obtained depending on uses. And it has been a problem that smoking is generated at melting.

### DISCLOSURE OF INVENTION

An object of the present invention is to provide a tackifier that is the raw material of an adherence adhesive having good adhesion performance (in particular, holding power) for all members and can be used for various adherence adhesives, and a tackifier emulsion capable of being used for various aqueous adherence adhesives. Further, another object of the present invention is to provide an adherence adhesive composition having good adhesion performance (in particular, holding power) for all members, little smoking property and good workability, using the tackifier or the tackifier emulsion.

The present inventors have studied various tackifier resins and components thereof, and as a result, have found that adhesion performance (in particular, holding power) can be improved by setting a specific component as less than a specific amount.

Namely, the present invention relates to the use of a rosin resin for a tackifier containing the rosin resin, wherein a ratio of the content of a component with a molecular weight of at most 300 contained in the rosin resin to the softening point of the rosin resin (the content (% by weight) of a component with a molecular weight of at most 300/softening point (K)) is at most 0.004, the content of a component with a molecular weight of at most 300 is at most 1.5% by weight and the rosin resin is an esterified product of rosins and alcohols; and an adherence adhesive composition containing the tackifier.

Further, the present invention relates to a tackifier emulsion obtained by emulsifying a rosin resin wherein a ratio of the content of a component with a molecular weight of at most 300 contained in the rosin resin to the softening point of the rosin resin (the content (% by weight) of a component with a molecular weight of at most 300/softening point (K)) is at most 0.004, the content of a component with a molecular weight of at most 300 is at most 1.5% by weight and the rosin resin is an esterified product of rosins and alcohols; and an aqueous adherence adhesive composition comprising the tackifier emulsion.

### BEST MODE FOR CARRYING OUT THE INVENTION

The tackifier resin used for the tackifier and tackifier emulsion of the present invention consists of a rosin resin wherein a ratio of the content of a component with a molecular weight of at most 300 contained in the rosin resin to the softening point of the rosin resin (the content (% by weight) of a component with a molecular weight of at most 300/softening point (K)) is at most 0.004.

In the present invention, the content (% by weight) of a component with a molecular weight of at most 300 is determined from the ratio of a peak area by gel permeation chromatography (GPC), namely by dividing the summation of the peak area of a component with a molecular weight of at most 300 by GPC by the summation of the peak area. In the present invention, the content (% by weight) of a component with a molecular weight of at most 300 is determined from a value converted to polystyrene using a specific GPC device and a column as described in Examples, Further, the component with a molecular weight of at most 300 is usually considered to be decomposed substances generated in various reactions (for example, those in which abietic acid is decarbonated and loses a carboxyl group), catalysts and unreacted articles remaining in the reaction system and impurities contained in rosins. The boiling point and melting point of these components are low because of their molecular weight and when a lot of the components exist in the rosin resin, it causes smoking and the lowering of holding power.

In the present invention, the softening point is one representing a softening point measured by a ring ball method (JIS K 5902), by absolute temperature (K). When the softening point is high, adhesion force (in particular, holding power) tends generally to be good, but when the softening point is too high, there are problems that compatibility with a base polymer used for an adherence adhesive is remarkably decreased and adhesion force at from low temperature to room temperature is lowered. Consequently, the softening point at 360 to 450K is preferable and the softening point at 390 to 450K is preferable in particular.

Further, when the low boiling point component with a molecular weight of at most 300 is less, the holding power and smoking property show good performance and thus the content of the low boiling point component with a molecular weight of at most 300 is at most 1.5 %.

From the above-mentioned reasons, it is necessary that a ratio of the content of a component with a molecular weight of at most 300 to a value represented by the softening point (K) is at most 0.004 and the adhesion performance (in particular, holding power) and smoking property are further improved by setting as at most 0.002.

The rosin resin used for the present invention are rosins obtained by esterification by adding alcohol. Further, when the rosin resin is produced by using steps such as modification, hydrogenation, polymerization in addition to esterification by adding alcohol, their order is not specifically limited and may be decided by known methods. For example, after alcohol is added to the rosins to prepare ester, hydrogenation may be carried out. For example, the rosins may be those improving color tone by using methods described in Japanese Unexamined Patent Publication Nos. 4-72369, 5-86334 and 5-279631.

The specific example of the rosin resin obtained by the afore-mentioned methods includes rosin esters obtained from raw material rosins such as modified rosins obtained by modifying the rosins, hydrogenated rosins obtained by hydrogenating the rosins, disproportionated rosins obtained by disproportionating the rosins and polymerized rosins obtained by polymerizing the rosins (hereinafter, referred to as the raw material rosins) and alcohols. As the modified rosins, for example, unsaturated modified rosins obtained by modifying the rosins with unsaturated acid and phenolic modified rosins obtained by modifying the rosins with phenols are mentioned. As unsaturated acid used for the production of rosins modified with unsaturated acids, examples such as acrylic acid, methacrylic acid, fumaric acid and maleic acid can be used. As the phenols used for rosins modified with phenols, examples such as phenol and an alkylphenol can be used. The modification method is not specifically limited and known methods may be used and a method of mixing the rosins with phenols or unsaturated acid and heating them is usually adopted.

Alcohols used for the production of the raw material rosin esters with raw material rosins and alcohols include monovalent alcohols such as methanol, ethanol and propanol, divalent alcohols such as ethylene glycol, diethylene glycol and propylene glycol, neopentyl glycol, trivalent alcohols such as glycerin, trimethylol ethane and trimethylolpropane, tetravalent alcohols such as pentaerythritol and diglycerin and hexavalent alcohols such as dipentaerythritol. The production process of the rosin esters is not specifically limited and known methods can be adopted. A method of mixing the raw material rosins with alcohols and heating the mixture in the presence of an esterification catalyst optionally is adopted. Among these rosin resins, a resin obtained by the esterification of the rosins with a polyvalent alcohol and polymerized rosins are preferable and as the raw material rosins, the rosin esters using disproportionated rosins and polymerized rosins (namely, polymerized rosin esters and disproportionated rosin esters) are preferable in particular from the viewpoint of adherence adhesion performance.

An acid value, a hydroxyl value and a softening point of the rosin resin vary depending on its species, but the acid value is usually about 1 to about 50 KOH mg/g, a hydroxyl value is about 1 to about 70 KOH mg/g and the softening point is about 360 to about 450K. In particular, rosin resin having a softening point of about 390 to about 450K is preferable.

As described above, the tackifier resin in the present invention is required to be a rosin resin wherein a ratio of the content of a component with a molecular weight of at most 300 to the softening point of the rosin resin (the content (% by weight) of a component with a molecular weight of at most 300/softening point (K)) is at most 0.004. Accordingly, the content of a component with a molecular weight of at most 300 is usually required to be removed from the rosin resin obtained by the afore-mentioned method up to (the content (% by weight) of a component with a molecular weight of at most 300/softening point (K)) is at most 0.004.

The method of removing a component with a molecular weight of at most 300 is not specifically limited and a known method can be adopted. Specifically, for example, there are mentioned methods such as a reduced pressure distillation method under heating and reduced pressure, a molecular distillation method superior in evaporation efficiency, a steam distillation method of blowing heated steam under heating and normal pressure or reduced pressure, and a method of extracting with a solvent dissolving only the component with a molecular weight of at most 300. When the component with a molecular weight of at most 300 is removed by heating under reduced pressure, it is necessary that temperature is set at about 200 to about 300°C and pressure is set at about 0.01 to 3 kPa. Although the time is different depending on the conditions of temperature and reduced pressure, removing a component with a molecular weight of at most 300 may be continued until (the content (% by weight) of a component with a molecular weight of at most 300/softening point (K)) is at most 0.004 and the temperature is about 270°C, the pressure is about 0.5 kPa and the time is about 1 hour.

When the component with a molecular weight of at most 300 is removed by the steam distillation method, wherein steam heated at a temperature of about 200 to about 300°C and pressurized at 0.1 to 1 MPa is usually blown under normal pressure to carry out the steam distillation. The time of distillation depends on temperature and condition of blowing steam, but steam distillation may be continued until (the content (% by weight) of a component with a molecular weight of at most 300/softening point (K)) is at most 0.004 and the time is usually about 2 hrs by steam blowing at 270°C and 0.1 MPa.

When a component with a molecular weight of at most 300 is extracted with a solvent, for example, pulverizing the afore-mentioned rosin resin, and then extracting it with a solvent dissolving only the component with a molecular weight of at most 300 is mentioned. As the solvent used, for example, solvents such as aliphatic hydrocarbons such as hexane and heptane and alcohols such as methanol and ethanol are mentioned.

The rosin resin thus obtained is a resin in which (the content (% by weight) of a component with a molecular weight of at most 300/softening point (K)) is at most 0.004, an acid value is usually about 1 to about 50 KOH mg/g, a hydroxyl value is about 1 to about 70 KOH mg/g and its softening point is 360 to 450K. A resin in which the softening point is 390 to 450K is preferable from the viewpoint of good adherence adhesion performance in particular. The flash point (measured by a Cleveland release type flash point measurement device in accordance with JIS K 2265) of the rosin resin is at least 300°C, further, the temperature of 2 % weight reduction by heating is at least 270°C and the temperature of 5 % weight reduction by heating is at least 310°C. Further, the temperature of weight reduction by heating is temperature at which the weight of a sample is respectively reduced by 2 % and 5 % at measuring the weight of the sample of 10 mg at a measurement temperature of 25 to 400°C and a temperature rising speed of 5°C/min under nitrogen atmosphere by a device for simultaneous measurement of differential heat and weight (trade name: TG/DTA 220 manufactured by Seiko Corporation).

The tackifier provided by the present invention contains the rosin resin obtained by the method and the tackifier can be used as the raw material of the adherence adhesive.

The adherence adhesive of the present invention is obtained by using the afore-mentioned tackifier. The adherence adhesive is selected from an acryl pressure sensitive adhesive composition, a styrene-conjugated diene block copolymer adherence composition and an ethylene hot melt adhesive.

The acryl pressure sensitive adhesive is obtained by compounding the tackifier in an acrylic polymer as a base polymer.

The acrylic polymer is not specifically limited and various known homopolymers or copolymers used as the acryl pressure sensitive adhesive can be used as they are. As the monomer used for the acrylic polymer, various (meth)acrylates (further, (meth)acrylate means acrylate and/or methacrylate and hereinafter, (meth) is similar meaning) can be used. As the specific example of the (meth)acrylate, there can be exemplified (meth)acrylates such as methyl (meth)acrylate, ethyl (meth)acrylate, butyl (meth)acrylate and 2-ethylhexyl (meth)acrylate and these can be used alone or used in combination. Further, a small amount of (meth)acrylic acid can be also used in place of the portion of the (meth)acrylate for providing polarity to the acrylic polymer obtained. Further, as a crosslinking monomer, glycidyl (meth)acrylate, 2-hydroxyethyl (meth) acrylate and N-methylol N-(meth)acrylamide can be also used in combination. Further, according to requirement, other copolymerizable monomers such as vinyl acetate and styrene can be also used in combination at a level not damaging the adherence property of the (meth)acrylate polymer.

The glass transition temperature of the acrylic polymer in which these (meth)acrylates are main component is not specifically limited, but is usually about -90 to about 0°C and preferably -80 to -10°C. When the glass transition temperature is too higher than 0°C, tackiness is lowered, and when it is too lower than -90°C, adhesion force tends to be lowered. Further, the molecular weight is not specifically limited, but weight average molecular weight is usually about 200,000 to about 1,000,000 and preferably about 300,000 to about 900,000. The adherence adhesion performance is bettered by setting the molecular weight in the range.

Further, as the production process of the acrylic polymer, various known processes may be adopted, and for example, radical polymerization processes such as a bulk polymerization process, a solution polymerization process and a suspension polymerization process can be suitably selected. As a radical polymerization initiator, various known initiators such as azo compounds and peroxides can be used, the reaction temperature is usually about 50 to about 85°C and the reaction time is about 1 to about 8 hrs. Further, as the solvent of the acrylic polymer, polar solvents such as ethyl acetate and toluene are generally used and the solution concentration is usually about 40 to about 60 % by weight.

As the compositional ratio of the acryl pressure sensitive adhesive of the present invention, about 1 to 40 parts by weight of the tackifier resin based on 100 parts by weight of the acrylic polymer and preferably 5 to 30 parts by weight are compounded to be used. When the addition amount of the tackifier resin is less than 1 part by weight, it is difficult to provide adequate adherence property and when it exceeds 40 parts by weight, not only compatibility is lowered but also the adhesive composition becomes inelastic; therefore, it is not preferable because adhesion force and tackiness are also lowered.

Further, the acryl pressure sensitive adhesive composition of the present invention can also improve coagulation force and heat resistance by adding crosslinking agents such as a polyisocyanate compound, a polyamine compound, a melamine resin, a urea resin and an epoxy resin to the acrylic polymer and tackifier resin. A polyisocyanate compound is preferably used in particular and the specific example includes various known isocyanates such as 1,6-hexamethylene diisocyanate, tetramethylene diisocyanate, isophorone diisocyanate, xylylene diisocyanate, tolylene diisocyanate and 4,4-diphenylmethane diisocyanate. Further, the acryl pressure sensitive adhesive composition of the present invention can suitably contain additives such as a filler, an antioxidant and an ultraviolet absorbent if necessary. Further, the acryl pressure sensitive adhesive composition of the present invention can also contain various known tackifier resins in combination within a range not deviating the purpose of the present invention.

The styrene-conjugated diene block copolymer adherence adhesive composition of the present invention compounds the afore-mentioned tackifier resin, styrene-conjugated diene block copolymer and an oil.

The styrene-conjugated diene block copolymer is a block copolymer obtained by suitably selecting styrenes such as styrene and methylstyrene and conjugated dienes such as butadiene and isoprene in accordance with use purpose and copolymerizing them. The weight ratio of styrenes/conjugated dienes is usually 10/90 to 50/50. The preferable specific example of the block copolymer includes, for example, an SBS type block copolymer in which the weight ratio of styrenes (S)/butadiene (B) is within a range of 10/90 to 50/50 and an SIS block copolymer in which the weight ratio of styrenes (S)/isoprene (I) is within a range of 10/90 to 30/70. Further, the styrene-conjugated diene block copolymer of the present invention includes also those obtained by hydrogenating the conjugated diene component of the block copolymer. The specific example of the hydrogenated block copolymer includes block copolymers such as an SEBS block copolymer and an SEPS block copolymer.

Further, the oil includes plasticizing oil such as naphthalene oil, paraffin oil and aromatic oil. The naphthalene oil and paraffin oil are preferable from the viewpoint that the lowering of coagulation force is little. Specifically, oils such as naphthalene process oil, paraffin process oil and liquid polybutene are mentioned.

As the amounts of respective components used, 15 to 210 parts by weight of the tackifier, 4 to 200 parts by weight of the styrene-conjugated diene block copolymer and 4 to 200 parts by weight of oil are included.

When the styrene-conjugated diene block copolymer is less than 4 parts by weight, holding power is inadequate and when it exceeds 200 parts by weight, it is not preferable because the melt viscosity of the adherence adhesive composition obtained is too high. Further, when oil is less than 4 parts by weight, the melt viscosity of the adherence adhesive composition is high and when it exceeds 200 parts by weight, holding power is occasionally inadequate.

Further, additives such as a filler and an antioxidant can be further added to the block copolymer adherence adhesive composition of the present invention if necessary.

The ethylene hot melt adhesive composition of the present invention can be obtained by compounding the tackifier with an ethylene copolymer.

The ethylene copolymer is the copolymer of ethylene with a monomer copolymerizable with ethylene and those conventionally used as a hot melt adhesive can be used. The monomer which is copolymerized with ethylene includes monomers such as vinyl acetate. The content of vinyl acetate is usually about 20 to 45 % by weight. Further, as molecular weight, those having a melt index (190°C, a load of 2160 g, for 10 min) of about 10 to 400 g/10 min are preferable.

As a wax, those used in the hot melt adhesive can be used and specifically, petroleum waxes such as paraffin wax and micro crystalline wax, and synthetic waxes such as Fischer Tropsch wax and low molecular weight polyethylene wax are mentioned.

The ethylene hot melt adhesive of the present invention includes 100 parts by weight of the ethylene copolymer, 50 to 150 parts by weight of the tackifier of the present invention and 10 to 100 parts by weight of wax.

When the tackifier is less than 50 parts by weight, adequate adhesion force is not obtained and when it exceeds 150 parts by weight, the adequate holding power is not occasionally obtained. Further when the wax is less than 10 parts by weight, the melt viscosity of the adhesive composition obtained is too high and when it exceeds 100 parts by weight, the adequate holding power is not obtained, and thus these cases are not preferable. Further, additives such as a filler and an antioxidant can be further added to the ethylene hot melt adhesive composition of the present invention if necessary.

The tackifier emulsion of the present invention is obtained by emulsifying the tackifier resin containing the rosin resin obtained by the method.

When the tackifier resin is emulsified, an emulsifier is usually used. The emulsifier used is not specifically limited and known emulsifiers can be used. Specifically, emulsifiers such as a high molecular weight emulsifier obtained by polymerizing a vinyl monomer, a low molecular weight anionic emulsifier and a low molecular weight nonionic emulsifier are mentioned. In the present invention, the use of the high molecular weight emulsifier is preferable in particular because adhesion performance (in particular, holding power) and mechanical stability can be improved.

The high molecular weight emulsifier is an emulsifier having emulsification ability that is obtained by copolymerizing vinyl monomers, but it is preferable that a high molecular weight emulsifier particularly obtained by copolymerizing 10 to 80 % by weight of an anionic monomer (A) (hereinafter, referred to as the component (A)), 10 to 50 % by weight of styrenes and/or alkyl (meth)acrylate (B) (hereinafter, referred to as the component (B)) and 10 to 50 % by weight of a reactive emulsifier (C) (hereinafter, referred to as the component (C)) is used because adhesion performance (in particular, holding power) can be improved.

The component (A) is not specifically limited so far as it is a monomer having a vinyl group and anionic functional groups such as a carboxyl group, a phosphoric acid group and a sulfonic acid group in a molecule and known monomers can be used. Specifically, examples the component (A) include carboxylic acids such as monocarboxylic acids such as acrylic acid, methacrylic acid and crotonic acid and dicarboxylic acids such as maleic acid, maleic anhydride, fumaric acid, itaconic acid and muconic acid; organic sulfonic acids such as vinylsulfonic acid, styrenesulfonic acid and 2-acrylamide-2-methylpropanesulfonic acid; phosphoric acid vinyl monomers such as (meth)acryloyloxyethylacid phosphate; and the alkali metal salt such as sodium salt and potassium salt of these various organic acids, the alkali earth metal salt thereof, the ammonium salt thereof and the salt of organic base thereof. These components (A) may be used alone and a plurality of the components may be used in combination. Among these components (A), methacrylic acid and styrenesulfonic acid are preferable from the viewpoints of the emulsifying property of the high molecular weight emulsifier obtained and compatibility with the tackifier resin. In particular, styrenesulfonic acid is preferable from the viewpoint of compatibility with the tackifier resin.

Examples of the component (B) include styrene, α-methylstyrene and vinyl toluene. Among these, styrene and α-methylstyrene are preferable from the viewpoint of compatibility with the tackifier resin. Further, alkyl (meth)acrylate includes methyl (meth)acrylate, ethyl (meth)acrylate, n-propyl (meth)acrylate, isopropyl (meth)acrylate, n-butyl (meth)acrylate, isobutyl (meth)acrylate, 2-ethylhexyl (meth)acrylate, allyl (meth)acrylate and cyclohexyl (meth)acrylate. These may be used alone and a plurality of these may be used in combination.

The component (C) is a surfactant having a hydrophilic group, a hydrophobic group, and a carbon-carbon double bond, and it is not included in the components (A) and (B). Examples of the carbon-carbon double bond include functional groups such as a (meth)allyl group, a 1-propenyl group, a 2-methyl-1-propenyl group, a vinyl group, an isopropenyl group and a (meth)acryloyl group. The specific example of the component (C) includes polyoxyethylene alkyl ether having at least one of the functional group in a molecule, the salt of sulfosuccinic acid ester of the polyoxyethylene alkyl ether having at least one of the functional groups in a molecule, the salt of sulfuric acid ester of the polyoxyethylene alkyl ether having at least one of the functional groups in a molecule, polyoxyethylene phenyl ether having at least one of the functional groups in a molecule, the salt of sulfosuccinic acid ester of the polyoxyethylene phenyl ether having at least one of the functional groups in a molecule, the salt of sulfuric acid ester of the polyoxyethylene phenyl ether having at least one of the functional groups in a molecule, polyoxyethylene alkylphenyl ether having at least one of the functional groups in a molecule, the salt of sulfosuccinic acid ester of the polyoxyethylene alkylphenyl ether having at least one of the functional groups in a molecule, the salt of sulfuric acid ester of the polyoxyethylene alkylphenyl ether having at least one of the functional groups in a molecule, polyoxyethylene aralkyl ether having at least one of the functional groups in a molecule, the salt of sulfosuccinic acid ester of the polyoxyethylene aralkyl ether having at least one of the functional groups in a molecule, the salt of sulfuric acid ester of the polyoxyethylene aralkyl ether having at least one of the functional groups in a molecule, the salt of phosphoric acid ester of the polyoxyethylene alkylphenyl ether having at least one of the functional groups in a molecule, the salt of aliphatic or aromatic carboxylic acid of the polyoxyethylene alkylphenyl ether having at least one of the functional groups in a molecule, acidic phosphoric acid-(meth)acrylate emulsifier, the modified product of the acid anhydride of rosin glycidyl ester acrylate (refer to Japanese Unexamined Patent Publication No. 4-256429) and various emulsifiers described in Japanese Unexamined Patent Publication Nos. 63-23725, 63-240931 and 62-104802. Further, those in which polyoxyethylene in the reactive emulsifier is replaced with polyoxypropylene or the block copolymer or random copolymer of polyoxyethylene and polyoxypropylene can be also mentioned. In the present invention, the reactive emulsifier can be used without particular limitation.

Typical examples of the commercially available products of the component (C) include (trade name: KAYAMER PM-1, available from Nippon Kayaku Co., Ltd.), (trade name: KAYAMER PM-2, available from Nippon Kayaku Co., Ltd.), (trade name: KAYAMER PM-21, available from Nippon Kayaku Co., Ltd.), (trade name: SE-10N, available from ADEKA CORPORATION), (trade name: NE-10, available from ADEKA CORPORATION), (trade name: NE-20, available from ADEKA CORPORATION), (trade name: NE-30, available from ADEKA CORPORATION), (trade name: NEW FRONTIER A229E, available from Dai-ichi Kogyo Seiyaku Co., Ltd.), (trade name: NEW FRONTIER N-117E, available from Dai-ichi Kogyo Seiyaku Co., Ltd.), (trade name: NEW FRONTIER N-250Z, available from Dai-ichi Kogyo Seiyaku Co., Ltd.), (trade name: AQUALON RN-10, available from Dai-ichi Kogyo Seiyaku Co., Ltd.), (trade name: AQUALON RN-20, available from Dai-ichi Kogyo Seiyaku Co., Ltd.), (trade name: AQUALON RN-50, available from Dai-ichi Kogyo Seiyaku Co., Ltd.), (trade name: AQUALON HS-10, available from Dai-ichi Kogyo Seiyaku Co., Ltd.), (trade name: EMINOL JS-2, available from Sanyo Chemical Industries Ltd.) and (trade name: Laterum K-180, available from KAO CORPORATION). Among these reactive emulsifiers, the polyoxyethylene phenyl ether emulsifier is better from the viewpoints of polymerization property and the emulsifying property of the polymer emulsifier and as commercially available products, (trade name: AQUALON RN-10, available from Dai-ichi Kogyo Seiyaku Co., Ltd.), (trade name: AQUALON RN-20, available from Dai-ichi Kogyo Seiyaku Co., Ltd.) and (trade name: AQUALON RN-50, available from Dai-ichi Kogyo Seiyaku Co., Ltd.) are preferable.

The polymer emulsifier is obtained by copolymerizing about 10 to about 80 % by weight and preferably 20 to 70 % by weight of the component (A), about 10 to about 50 % by weight and preferably 15 to 40 % by weight of the component (B) and about 10 to about 50 % by weight and preferably 10 to 40 % by weight of the component (C). The component (A) of at least 10 % by weight is preferable because the emulsifying property is improved and the component (A) of less than 80 % by weight is preferable because water resistance is improved. Further, the component (B) of at least 10 % by weight is preferable because compatibility with the tackifier resin is improved and the component (B) of at most 50 % by weight is preferable because the emulsifying property is improved. Further, the component (C) of at least 10 % by weight is preferable because the emulsifying property is improved and the component (C) of at most 50 % by weight is preferable because water resistance is improved.

As the polymerization process for the polymer emulsifier, various known processes such as a solution polymerization process, an emulsion polymerization process and a suspension polymerization process can be adopted as they are. Further, as the component (A), those in which a salt may be formed by being partially neutralized or completely neutralized before polymerization and a salt may be formed by being partially neutralized or completely neutralized after polymerization.

As the solvent used for solution polymerization, there can be used solvents such as benzene, toluene, xylene, hexane, cyclohexane, methanol, ethanol, isopropyl alcohol, ethyl acetate, acetone, methyl isobutyl ketone, dioxane, dimethylformamide and dimethylsulfoxide.

Since the component (C) has the emulsifying ability in case of the emulsion polymerization, an emulsifier is not necessary in particular but an emulsifier used for emulsion polymerization other than the component (C) may be used. Examples of the emulsifier include anionic emulsifiers such as the salt of dialkyl sulfosuccinate, the salt of alkanesulfonic acid, the salt of α-olefinsulfonic acid, the salt of sulfosuccinic acid ester of the polyoxyethylene alkyl ether, the salt of sulfosuccinic acid ester of the polyoxyethylene styrylphenyl ether, the naphthalene sulfonic acid formaldehyde condensate, the salt of sulfuric acid ester of the polyoxyethylene alkyl ether and the salt of sulfuric acid ester of the polyoxyethylene alkylphenyl ether; and nonionic emulsifiers such as polyoxyethylene alkyl ether, polyoxyethylene styrylphenyl ether and polyoxyethylene sorbitan aliphatic acid ester. One of these emulsifiers can be used alone and at least 2 of these can be suitably selected to be used. The amount used is at most about 10 % by weight, preferably about 0.1 to 10 % by weight, based on the total feed amount of the components (A), (B) and (C).

The polymerization initiator used for the emulsion polymerization is not specifically limited and various known initiators such as persulfates, peroxides, an azo compound and a redox initiator can be used. It is preferable that weight average molecular weight is usually set as about 1000 to 200,000 because the molecular weight of the component (C) is directly correlated with the dispersing ability of emulsion of the tackifier resin. Further, known chain transfer agents may be used for controlling the molecular weight. The example of the chain transfer agent includes isopropyl alcohol, carbon tetrachloride, ethylbenzene, isopropylbenzene, cumene, thioglycol acid ester and alkylmercaptane, and 2,4-diphenyl-4-methyl-1-pentene. The amount of the chain transfer agent used that is used for production of the polymer emulsifier is usually about 0.5 to 30 % by weight based on the total feed amount of the components (A) to (C).

The amount of the polymer emulsifier used is not specifically limited, and is about 1 to 10 parts by weight based on 100 parts by weight of the tackifier resin in terms of a solid content and preferably 2 to 7 parts by weight. When it exceeds 10 parts by weight, the water resistance of the aqueous adherence adhesive composition is lowered and when it is less than 1 part by weight, the storage stability of resin emulsion at emulsification and mechanical stability are deteriorated.

As the emulsification process, a high pressure emulsification process and a phase inversion emulsification process that have been conventionally known can be adopted. The specific example includes a process of dissolving the tackifier resin in solvents such as benzene and toluene, then adding the polymer emulsion machine and soft water, preparing emulsion using a high pressure emulsifier and then removing the solvent under reduced pressure; a process of mixing the tackifier resin with a small amount of solvents such as benzene and toluene, successively kneading an emulsifier, further gradually adding hot water to emulsify it by reverse phase to obtain emulsion and then removing the solvent or using it as it is; and a process of raising temperature to at least the softening point of the resin under increased pressure or normal pressure, kneading an emulsifier, gradually adding hot water to emulsify it by reverse phase and preparing emulsion.

The solid concentration of the tackifier emulsion thus obtained is not specifically limited, and is suitably adjusted so as to be usually about 20 to 70 % by weight. Further, the average particle diameter of the emulsion obtained is usually about 0.2 to 2 µm and the major portion is uniformly dispersed as particles with at most 0.5 µm. The emulsion exhibits the appearance of white to milky white and has pH of about 2 to 9.

The tackifier emulsion obtained in the above-description of the present invention is compounded with the acrylic polymer emulsion as a base resin and/or latex for an adherence adhesive to provide adherence property such as tackiness to various aqueous adherence adhesive compositions and to improve the mechanical shear of the aqueous adherence adhesive composition.

As the acrylic polymer emulsion, those generally used in various acryl adherence adhesive can be used, and it can be easily produced by known processes such as a process of feeding (meth)acrylate by one shot to be polymerized, a polymerization process by monomer successive addition, a polymerization process by emulsifying-monomer successive addition and a seed polymerization process.

The example of the (meth)acrylate used includes methyl (meth)acrylate, ethyl (meth)acrylate, butyl (meth)acrylate, 2-ethylhexyl (meth)acrylate, glycidyl (meth)acrylate and 2-hydroxyethyl (meth)acrylate. These may be used alone or at least 2 are used in mixture. Further, a small amount of (meth)acrylic acid may be used in place of the (meth)acrylate in order to provide storage stability to emulsion obtained. Further, for example, copolymerizable monomer such as vinyl acetate and styrene can be used in combination within a level not damaging the adhesion property of the (meth)acrylate polymer if necessary. The glass transition temperature of the polymer in which these (meth)acrylates are main component is usually about -70 to 0°C and preferably -60 to -10°C. The glass transition temperature exceeding 0°C is not preferable because tackiness is remarkably lowered. Further, an anionic emulsifier and partially saponified polyvinyl alcohol can be used for the emulsifier used for the acrylic polymer emulsion. Its use amount is about 0.1 to 5 parts by weight based on 100 parts by weight and preferably 0.5 to 3 parts by weight.

The proportion used of the acrylic polymer emulsion to the tackifier emulsion is preferably usually about 5 to 30 parts by weight (in terms of a solid content) of the tackifier emulsion based on 100 parts by weight of the acrylic polymer emulsion (in terms of a solid content). When the tackifier emulsion is less than 5 parts by weight, modification by adding the tackifier resin is hardly observed and when it exceeds 30 parts by weight, coagulation force tends to be lowered and both cases are not suitable.

Further, the latex for the adherence adhesive includes natural rubber latex, styrene-butadiene copolymer latex and chloroprene latex. As the natural rubber latex, known latex used for the aqueous adherence adhesive composition can be used, and there may be depolymerized or not depolymerized. Styrene-butadiene copolymer latex and chloroprene latex commercially available for an adherence adhesive can be usually used. Further, the styrene-butadiene copolymer latex and chloroprene latex may be those modified with carboxyl group.

The proportion used of the adherence adhesive latex to the tackifier emulsion is preferably usually about 5 to 150 parts by weight (in terms of a solid content) of the tackifier emulsion based on 100 parts by weight of the latex for adherence adhesive (in terms of a solid content). When the tackifier emulsion is less than 5 parts by weight, modification by adding the tackifier resin is hardly observed and when it exceeds 150 parts by weight, coagulation force tends to be lowered and both cases are not suitable.

The aqueous adherence adhesive composition of the present invention can contain the acrylic polymer emulsion as a base resin and the latex for adherence adhesive in combination and can contain further a defoaming agent, a thickener, a filler, an antioxidant, a water resistant agent and a film forming aid if necessary.

### EXAMPLES

The present invention is more specifically illustrated below according to Examples, but the present invention is not limited only to these Examples. In addition, all "%" in respective Examples is based on weight.

Firstly, the tackifier provided by the invention of the present application and the adherence adhesive composition including the tackifier are illustrated according to Examples 1 to 5 and Comparative Examples 1 to 6.

### EXAMPLE 1 (Reference Example)

A polymerized rosin ester (trade name: PENSEL D-160, available from Arakawa Chemical Industries, Ltd.) was melted at 280°C and then reduced-pressure distillation was carried out for 1 hr under 0.5 kPa. The softening point of the residual tackifier was 442K. The content of a component with a molecular weight of at most 300 was 1.7 %. The value of the content (%) of a component with a molecular weight of at most 300/softening point (K) was 0.0038.

Further, respective measurement values were measured by the under-mentioned methods. The result is shown in Table 1.

### (Softening point)

It was measured in accordance with JIS K 5902 and converted to an absolute temperature.

### (Content of component with molecular weight of at most 300)

It was determined by the summation of the peak area at lower molecular side than the peak of the unreacted rosin from a value measured by using the Gel Permeation Chromatography (GPC) (trade name: HLC-8120, manufactured by Tosoh Corporation, and column: trade name: TSKgel Super HM-Lx; 3 pieces, manufactured by Tosoh Corporation) and tetrahydrofuran as a solvent.

### (Flash point)

It was measured by a Cleveland open cup flash point measurement device in accordance with JIS K 2265.

### (Temperature of weight reduction by heating)

The temperature of weight reduction by heating at which the weight of a sample was respectively reduced by 2 % and 5 % at measuring the weight of the sample of 10 mg at a measurement temperature of 25 to 400°C and a temperature rising speed of 5°C/min under nitrogen atmosphere by a device for simultaneous measurement of differential heat and weight (trade name: TG/DTA 220 manufactured by Seiko Electronics Co.).

### EXAMPLE 2

An experiment was carried out in the same manner as Example 1 except that the polymerized rosin ester was replaced with a disproportionated rosin ester (trade name: SUPER ESTER T-125, available from Arakawa Chemical Industries, Ltd.) in Example 1. The properties of the obtained tackifier are shown in Table 1.

### EXAMPLE 3

An experiment was carried out in the same manner as Example 2 except that reduced pressure distillation was carried out for 2 hrs in Example 2. The properties of the obtained tackifier are shown in Table 1.

### EXAMPLE 4

An experiment was carried out in the same manner as Example 2 except that reduced pressure distillation was carried out for 3 hrs in Example 2. The properties of the obtained tackifier are shown in Table 1.

### EXAMPLE 5

An experiment was carried out in the same manner as Example 4 except that the disproportionated rosin ester was replaced with a general rosin ester (trade name: PENSEL AD, available from Arakawa Chemical Industries, Ltd.) in Example 4. The properties of the obtained tackifier are shown in Table 1.

**TABLE 1**

| | Softening point (A) (K) | Content of component with molecular weight of at most 300 (B) (% by weight) | (B)/(A) | Flash point (°C) | Temperature of weight reduction by heating (°C) | |
|---|---|---|---|---|---|---|
| | | | | | 2 % | 5 % |
| Ex. 1* | 442 | 1.7 | 0.0038 | 300< | 288 | 326 |
| Ex. 2 | 396 | 1.5 | 0.0038 | 300< | 292 | 332 |
| Ex. 3 | 398 | 1.0 | 0.0025 | 300< | 295 | 339 |
| Ex. 4 | 400 | 0.6 | 0.0015 | 300< | 279 | 324 |
| Ex. 5 | 381 | 0.4 | 0.0010 | 300< | 289 | 327 |

| | | | | | | |
|---|---|---|---|---|---|---|
| *Reference Example | | | | | | |

### COMPARATIVE EXAMPLES 1 to 4

Resins described in the following Table 2 were used as they were. The properties of the resins are shown in Table 2.

### COMPARATIVE EXAMPLE 5

100 parts of Chinese polymerized rosin was charged in a reactor equipped with a stirrer, a water separating device and a nitrogen introducing tube to be stirred in melt under a nitrogen stream, 5 parts of fumaric acid and 13 parts of pentaerythritol were added at 220°C, then a temperature was raised to 280°C and an esterification reaction was carried out at the same temperature for 12 hrs to obtain a resin. The properties of the resin are shown in Table 2.

### COMPARATIVE EXAMPLE 6

An experiment was carried out in the same manner as Example 4 except that the disproportionated rosin ester was replaced with a hydrogenated petroleum resin (trade name: ARKON P-100, available from Arakawa Chemical Industries, Ltd.) in Example 4. The properties of the obtained tackifier are shown in Table 2.

**TABLE 2**

| | | Softening point (A) (K) | Content of component with molecular weight of at most 300 (B) (% by weight) | (B)/(A) | Flash point (°C) | Temperature of weight reduction by heating (°C) | |
|---|---|---|---|---|---|---|---|
| | | | | | | 2% | 5% |
| Com. Ex. 1 | PENSEL D-160 | 428 | 3.0 | 0.0070 | 260 | 257 | 300 |
| Com. Ex. 2 | SUPER ESTER T-125 | 393 | 1.9 | 0.0048 | 253 | 232 | 271 |
| Com. Ex. 3 | PENSEL AD | 378 | 3.5 | 0.0093 | 255 | 230 | 265 |
| Com. Ex. 4 | SUPER ESTER A-75 | 353 | 2.0 | 0.0057 | 247 | 228 | 267 |
| Com. Ex. 5 | - | 451 | 3.0 | 0.0057 | 272 | 265 | 304 |
| Com. Ex. 6 | - | 398 | 0.7 | 0.0018 | 215 | 190 | 230 |

In the Table, SUPER ESTER A-75 is a rosin ester resin available from Arakawa Chemical Industries, Ltd.

### (Production of solvent type acrylic polymer)

After charging 50 parts of ethyl acetate and 30 parts of toluene in a reactor equipped with a stirrer, a cooling tube, two dropping funnels and a nitrogen introducing tube, temperature was raised under nitrogen flow until temperature in the system was about 75°C. Then, dropwise addition was carried out over about 3 hrs into the system from a dropping funnel in which 48.5 parts of butyl acrylate, 48.5 parts of 2-ethylhexyl acrylate and 3 parts of acrylic acid were preliminarily charged to be mixed and a dropping funnel in which 0.1 part of azoisobutyronitrile and 10 parts of ethyl acetate were preliminarily charged, and the mixture was kept at the same temperature for 5 hrs to complete polymerization reaction. Ethyl acetate was additionally added to adjust a solid content to about 50 % and a composition containing an acrylic polymer was obtained.

### PRACTICAL EXAMPLES 1 (Reference Example) and 2 to 5 and PRACTICAL COMPARATIVE EXAMPLES 1 to 6

### (Preparation of solvent type acryl adherence adhesive composition)

After 20 parts of 50 % toluene varnish of each of resins obtained in Examples 1 to 5 and Comparative Examples 1 to 6 was post-added to 100 parts (in terms of a solid content) of the solvent type acrylic polymer obtained in Production Example, 1.6 parts of a polyisocyanate compound (trade name: "CORONATE L", available from Nippon Polyurethane Industry Co., Ltd.) was added as a crosslinking agent to obtain solvent type acryl adherence adhesive compositions. The solvent type acryl adherence adhesive compositions obtained were coated on a polyester film with a thickness of 38 µm so as to be a dry film thickness of about 25 µm with a dice type applicator, then the solvent in the adherence adhesive compositions to prepare a sample tape and various tests were carried out by the evaluation methods of performance described later.

### (Holding power)

The sample tape (25 mm × 25 mm) was applied to a stainless panel and a load of 1 kg was applied at 70°C to measure migration (mm) after 24 hours. It can be said that the less the migration is, the stronger the holding power. The result is shown in Table 3.

### (Adhesive force)

The sample tape was cut into a width of 25 mm, an adherent plane obtained by peeling a release paper was applied to a polyethylene substrate and 180° (angle) peeling was carried out at 23°C at a peeling speed of 300 mm/min to measure adhesive force (N/25 mm) per a width of 25 mm at that time. The result is shown in Table 3.

### (Weight reduction by heating)

5 g of the sample tape was charged in a shale with a diameter of 5 cm and weight reduction by heating after 200°C × 1 hr was measured by % by weight. The result is shown in Table 3.

**TABLE 3**

| | Holding power (mm) | Adhesive force (N/25 mm) | Weight reduction by heating (%) |
|---|---|---|---|
| Practical Ex. 1* | 0.0 | 7.6 | 0.3 |
| Practical Ex. 2 | 0.0 | 6.8 | 0.2 |
| Practical Ex. 3 | 0.0 | 6.0 | 0.2 |
| Practical Ex. 4 | 0.0 | 5.6 | 0.1 |
| Practical Ex. 5 | 0.0 | 5.5 | 0.1 |
| Com. Practical Ex. 1 | 0.0 | 7.0 | 0.5 |
| Com. Practical Ex. 2 | 0.1 | 6.5 | 0.7 |
| Com. Practical Ex. 3 | 0.1 | 5.8 | 0.8 |
| Com. Practical Ex. 4 | 0.5 | 4.5 | 1.2 |
| Com. Practical Ex. 5 | 0.0 | 4.0 | 0.4 |
| Com. Practical Ex. 6 | 0.0 | 1.5 | 0.4 |

| | | | |
|---|---|---|---|
| * Reference Example | | | |

### PRACTICAL EXAMPLES 6 (Reference Example) and 7 to 10 and COMPARATIVE PRACTICAL EXAMPLES 7 to 12

### (Preparation of hot melt type EVA adherence adhesive composition)

40 parts of each of resins obtained in Examples 1 to 5 and Comparative Examples 1 to 6, 40 parts of EVA #210 (available from Mitsui DuPont Co., Ltd.) and 20 parts of SASOL WAX (available from SASOL Ltd.) were melt-kneaded to prepare hot melt type EVA adherence adhesive compositions and various tests were carried out by performance evaluation methods described later.

### (Holding power)

Each of the compounds obtained in Practical Examples 6 to 10 and Comparative Practical Examples 7 to 12 was coated by hot-melting on an aluminum substrate by a #22 bar coater, it was cut so as to be a width of 25 mm, it was applied to a corrugated board so as to be an area of 25 mm × 25 mm with an iron and a load of 500 g was applied at 60°C to measure falling time (hr). The result is shown in Table 4.

### (Adhesive force)

Each of the compounds obtained in Practical Examples 6 to 10 and Comparative Practical Examples 7 to 12 was coated by hot-melting on an aluminum substrate by a #22 bar coater, it was cut so as to be a width of 25 mm, it was applied to a corrugated board by heat seal and 180° (angle) peeling was carried out at a peeling speed of 300 mm/min at 23°C. The state of the test piece was visually observed. Material fracture indicates the material fracture of the corrugated board and the interface peeling indicates interface peeling at the interface of the corrugated board. It is indicated that the material fracture is good in the adhesive force. The result is shown in Table 4.

### (Weight reduction by heating)

5 g of each of the compounds obtained in Practical Examples 6 to 10 and Comparative Practical Examples 7 to 12 was charged in a shale with a diameter of 5 cm and weight reduction by heating after 200°C × 1 hr was measured by % by weight. The result is shown in Table 4.

**TABLE 4**

| | Holding power (time) | Adhesive force | Weight reduction by heating (%) |
|---|---|---|---|
| Practical Ex. 6* | 24< | Material fracture | 0.4 |
| Practical Ex. 7 | 24< | Material fracture | 0.5 |
| Practical Ex. 8 | 24< | Material fracture | 0.5 |
| Practical Ex. 9 | 24< | Material fracture | 0.3 |
| Practical Ex. 10 | 24< | Material fracture | 0.3 |
| Com. Practical Ex. 7 | 24< | Material fracture | 0.9 |
| Com. Practical Ex. 8 | 23 | Material fracture | 1.4 |
| Com. Practical Ex. 9 | 10 | Material fracture | 1.5 |
| Com. Practical Ex. 10 | 2 | Interface peeling | 2.0 |
| Com. Practical Ex. 11 | 24< | Interface peeling | 0.7 |
| Com. Practical Ex. 12 | 20 | Interface peeling | 0.5 |

| | | | |
|---|---|---|---|
| * Reference Example | | | |

Then, the tackifier emulsion of the invention by the present application and the aqueous adherence adhesive composition obtained by using the tackifier emulsion are illustrated according to Examples 6 to 10 and Comparative Examples 7 to 14.

### PRODUCTION EXAMPLE 1

### (Production example of acrylic polymer emulsion)

An aqueous solution containing 43.4 parts of water and 0.92 part of the sodium salt of polyoxyethylene alkyl ether sulfuric acid (anionic emulsifier: trade name: "HITENOL 073", available from Dai-ichi Kogyo Seiyaku Co., Ltd.) was charged in a reactor equipped with a stirrer, a thermometer, a reflux cooler, a dropping funnel and a nitrogen introducing tube and temperature was raised to 70°C. Then, 1/10 amount of a mixture including 45.1 parts of butyl acrylate and 1.40 parts of acrylic acid and 1/10 amount of an aqueous initiator solution containing 0.24 part of potassium persulfate (polymerization initiator), 0.11 part of a pH adjuster (baking soda) and 8.83 parts of water were added to the reactor and preliminary polymerization was carried out at 70°C for 30 minutes under nitrogen gas flow. Then, the residual 9/10 amount of the mixture and the aqueous initiator solution were respectively added to the reactor over 2 hrs to carry out emulsion polymerization and the reactor was kept at 70°C for 1 hr to complete the polymerization reaction. After cooling the acrylic polymer emulsion thus obtained to room temperature, it was filtered using a 100 mesh metal net to obtain an acrylic polymer emulsion with a solid content of 47.8 %.

### PRODUCTION EXAMPLE 2

### (Production example of polymer emulsifier)

25 parts (in terms of a solid content) of a polyoxyethylene phenyl ether reactive emulsifier (trade name: "AQUALON RN-50", available from Dai-ichi Kogyo Seiyaku Co., Ltd.), 12.5 parts of styrene, 12.5 parts of methyl methacrylate, 40 parts of methacrylic acid and 10 parts of sodium styrenesulfonate were charged in a reactor equipped with a stirrer, a thermometer, a reflux cooler and a nitrogen introducing tube and further, 20 parts of water was added to make the afore-mentioned feed components be transparent homogeneous system. Then, 1 part of dodecane thiol, 2 parts of benzoyl peroxide and 300 parts of water were mixed to this to start polymerization. After stirring the mixture at 65°C for 2 hrs, 29 parts of 28 % aqueous ammonia solution, the mixture was stirred at 65°C for 6 hrs to complete the polymerization and then, the mixture was cooled to room temperature. The dispersion of a polymer emulsifier with a non volatile content of 22.5 % was obtained.

### PRODUCTION EXAMPLE 3

### (Production example of polymer emulsifier)

25 parts (in terms of a solid content) of a polyoxyethylene phenyl ether reactive emulsifier (trade name: "AQUALON RN-10", available from Dai-ichi Kogyo Seiyaku Co., Ltd.), 20 parts of styrene, 15 parts of methyl methacrylate, 30 parts of methacrylic acid and 15 parts of sodium styrene sulfonate were charged in a reactor similar as Production Example 2 and further, 20 parts of water was added to make the fore-mentioned feed components be transparent homogeneous system. Then, 0.5 part of octane thiol, 2 parts of potassium sulfate and 300 parts of water were mixed to this to start polymerization. After stirring the mixture at 85°C for 2 hrs, 1 part of persulfate was added and the mixture was kept at the same temperature for 1 hr. After further adding 28.6 parts of 48 % potassium hydroxide, the mixture was cooled to room temperature. The dispersion of a polymer emulsifier with a non-volatile content of 23.8 % was obtained.

### PRODUCTION EXAMPLE 4

### (Production example of polymer emulsifier for Comparative Example)

30 parts of styrene, 30 parts of methyl methacrylate and 40 parts of methacrylic acid were charged in a reactor similar as Production Example 2. Then, 5 parts of 2,4-diphenyl-4-methyl-1-pentene, 2 parts of potassium persulfate and 300 parts of water were mixed to this to start polymerization. After stirring the mixture at 85°C for 2 hrs, 1 part of persulfate was added and the mixture was kept at the same temperature for 1 hr. After further adding 24 parts of 48 % potassium hydroxide, the mixture was cooled to room temperature. The dispersion of a polymer emulsifier with a non-volatile content of 24.5 % was obtained.

### PRODUCTION EXAMPLE 5

### (Production of base resin of tackifier emulsion; reference example)

A rosin ester (trade name: PENSEL D-160, polymerized Rosin Ester available from Arakawa Chemical Industries, Ltd.) was melted at 280°C and reduced-pressure distillation was carried out for 1 hr under 0.5 kPa. The softening point of the tackifier obtained was 442K. The content of a component with a molecular weight of at most 300 was 1.7 %. The value of the content (%) of a component with a molecular weight of at most 300/softening point (K) was 0.0038.

Further, the softening point was measured in accordance with JIS K 5902 and converted to absolute temperature. Further, the content of a component with molecular weight of at most 300 was measured by GPC (trade name: HLC-8120, manufactured by Tosoh Corporation, and column: trade name: TSKgel Super HM-Lx; 3 pieces, manufactured by Tosoh Corporation) and determined by dividing the summation of the peak area at lower molecular side than the peak of unreacted rosin by the summation of total peaks obtained by the measurement.

### PRODUCTION EXAMPLE 6

### (Production of base resin of tackifier emulsion)

An experiment was carried out in the same manner as Production Example 5 except that the resin was replaced with a rosin ester (trade name: SUPER ESTER T-125, dispropotionated Rosin Ester available from Arakawa Chemical Industries, Ltd.). The properties of the obtained tackifier are shown in Table 5.

### PRODUCTION EXAMPLE 7

### (Production of base resin of tackifier emulsion)

An experiment was carried out in the same manner as Production Example 6 except that reduced-pressure distillation was carried out for 2 hrs in Production Example 6. The properties of the obtained tackifier are shown in Table 5.

### PRODUCTION EXAMPLE 8

### (Production of base resin of tackifier emulsion)

An experiment was carried out in the same manner as Production Example 6 except that reduced-pressure distillation was carried out for 3 hrs in Production Example 6. The properties of the obtained tackifier are shown in Table 5.

### PRODUCTION EXAMPLE 9

### (Production of base resin of tackifier emulsion)

An experiment was carried out in the same manner as Production Example 8 except that the resin was replaced with a rosin ester (trade name: PENSEL AD, general Rosin Ester available from Arakawa Chemical Industries, Ltd.). The properties of the obtained tackifier are shown in Table 5.

**TABLE 5**

| | Softening point (A) (K) | Content (B) of component with molecular weight of at most 300 (% by weight) | (B)/(A) |
|---|---|---|---|
| Production Ex. 5* | 442 | 1.7 | 0.0038 |
| Production Ex. 6 | 396 | 1.5 | 0.0038 |
| Production Ex. 7 | 398 | 1.0 | 0.0025 |
| Production Ex. 8 | 400 | 0.6 | 0.0015 |
| Production Ex. 9 | 381 | 0.4 | 0.0010 |

| | | | |
|---|---|---|---|
| * Reference Example | | | |

The properties of resins for comparative example used in Comparative Examples described later are shown in Table 6.

### COMPARATIVE PRODUCTION EXAMPLE 1

### (Production of base resin for tackifier emulsion for Comparative Example)

100 parts of Chinese polymerized rosin was charged in a reactor equipped with a stirrer, a water separating device and a nitrogen introducing tube to be stirred in melt under nitrogen atmosphere flow, 5 parts of fumaric acid and 13 parts of pentaerythritol were added at 220°C, then a temperature was raised to 280°C and an esterification reaction was carried out at the same temperature for 12 hrs to obtain a resin. The properties of the resin are shown in Table 6.

### COMPARATIVE PRODUCTION EXAMPLE 2

### (Production of base resin for tackifier emulsion for Comparative Example)

An experiment was carried out in the same manner as Production Example 8 except that the resin was replaced with a hydrogenated petroleum resin (trade name: ARKON P-100, available from Arakawa Chemical Industries, Ltd.). The properties of the obtained tackifier are shown in Table 6.

**TABLE 6**

| | Trade name | Softening point (A) (K) | Content of component with molecular weight of at most 300 (B) (% by weight) | (B)/(A) |
|---|---|---|---|---|
| Resin for comparison 1 | PENSEL D-160 | 428 | 3.0 | 0.0070 |
| Resin for comparison 2 | SUPER ESTER T-125 | 393 | 1.9 | 0.0048 |
| Resin for comparison 3 | PENSEL AD | 378 | 3.5 | 0.0093 |
| Resin for comparison 4 | SUPER ESTER A-75 | 353 | 2.0 | 0.0057 |
| Com. Production Ex. 1 | - | 451 | 3.0 | 0.0057 |
| Com. Production Ex. 2 | - | 398 | 0.7 | 0.0018 |

In the Table, SUPER ESTER A 75 (trade name) is a rosin ester resin available from Arakawa Chemical Industries, Ltd.

### EXAMPLE 6 (Reference Example)

100 parts of the tackifier resin obtained in Production Example 5 and 60 parts of toluene were charged in a reactor equipped with a stirrer, a thermometer, a reflux cooler, a dropping funnel and a nitrogen introducing tube and temperature was raised to 100°C to dissolve the tackifier resin over about 1 hr. Then, this was cooled to 80°C and aqueous solution containing 5 parts (in terms of a solid content) of the dispersion solution of the polymer emulsifier obtained in Production Example 2 and 120 parts of water was added as an emulsifier. Then, it was strongly stirred at 75°C over 1 hr and preliminary emulsification was carried out. Further, the preliminary emulsion obtained was emulsified at high pressure under 30 MPa using a high pressure emulsion machine (available from Manton-Gaulin Co.) and an emulsion was obtained. Then, the emulsion was charged in a reduced pressure distilling machine and toluene and water were removed over 6 hours by vacuum distillation at conditions of 50°C and 130 hPa until its solid content was 50.0 %, to obtain a tackifier emulsion.

20 parts (in terms of a solid content) of the tackifier emulsion thus obtained and 80 parts of the acrylic polymer emulsion obtained in the afore-mentioned Production Example 1 were mixed to obtain an aqueous adherence adhesive composition.

### EXAMPLE 7

An experiment was carried out in the same manner as Example 6 except that the base resin obtained in Production Example 6 and the polymer emulsifier obtained in Production Example 4 were used in Example 6, and a tackifier emulsion was obtained. Further, an aqueous adhesive composition was obtained in the same manner as Example 6.

### EXAMPLES 8 to 10

Tackifier emulsions were obtained in the same manner as Example 7 except that the base resins obtained in Production Example 7 (corresponding to Example 8), Production Example 8 (corresponding to Example 9) and Production Example 9 (corresponding to Example 10) were used in place of the base resin obtained in Production Example 6, in Example 7. Further, aqueous adherence adhesive compositions were obtained in the same manner as Example 6.

### COMPARATIVE EXAMPLE 7

A tackifier emulsion was obtained in the same manner as Example 6 except that the resin for comparison 1 was used in place of the base resin obtained in Production Example 5, in Example 6. Further, an aqueous adherence adhesive composition was obtained in the same manner as Example 6.

### COMPARATIVE EXAMPLE 8

A tackifier emulsion was obtained in the same manner as Comparative Example 7 except that sodium dodecylbenzenesulfonate (trade name: "NEOGEN R", available from KAO Corporation) was used in place of the polymer emulsifier obtained in Production Example 2, in Comparative Example 7. Further, an aqueous adherence adhesive composition was obtained in the same manner as Example 6.

### COMPARATIVE EXAMPLE 9

A tackifier emulsion was obtained in the same manner as Comparative Example 7 except that the base resin obtained in Production Example 5 and the polymer emulsifier obtained in Production Example 6 were used in Comparative Example 7. Further, an aqueous adherence adhesive composition was obtained in the same manner as Example 6.

### COMPARATIVE EXAMPLE 10

A tackifier emulsion was obtained in the same manner as Comparative Example 7 except that the resin for comparison 2 and the polymer emulsifier obtained in Production Example 4 were used in Comparative Example 7. Further, an aqueous adherence adhesive composition was obtained in the same manner as Example 6.

### COMPARATIVE EXAMPLES 11 to 14

Tackifier emulsions were obtained in the same manner as Comparative Example 10 except that the resin for comparison 3 (corresponding to Comparative Example 11), the resin for comparison 4 (corresponding to Comparative Example 12) and the base resins obtained in Comparative Production Example 1 (corresponding to Comparative Example 13) and Comparative Production Example 2 (corresponding to Comparative Example 14) were used in place of the resin for comparison 2, in Comparative Example 10. Further, aqueous adherence adhesive compositions were obtained in the same manner as Example 6.

### (Production of sample film for adherence evaluation)

Each of the aqueous adherence adhesive compositions obtained by the above-mentioned processes was coated on a polyester film (a thickness of 38 µm) so as to be a dry film thickness of 25 µm, using a dice type applicator. Then, the film was dried in a drier with circulation wind at 105°C for 3 min and moisture in the adherence adhesive composition was removed to prepare a sample film.

### (Adhesive force)

A tape with a width of 25 mm × a length of 150 mm that was cut from the above-mentioned sample film was referred to as a sample tape. This was pasted with a polypropylene panel and 180° peeling was carried out at a peeling speed of 300 mm/min and 23°C to measure adhesive force (N/25 mm) per a width of 25 mm at that time. The result is shown in Table 7.

### (Holding power)

A tape with a width of 25 mm × a length of 25 mm that was cut from the above-mentioned sample film was referred to as a sample tape and this was pasted on a stainless plate. A load of 1 kg was applied at 70°C to measure migration (mm) after 24 hours. It can be said that the less the migration is, the stronger the holding power. The result is shown in Table 7.

### (Weight reduction by heating)

5 g of the sample tape was charged in a shale with a diameter of 5 cm and weight reduction by heating after 200°C × 1 hr was measured by % by weight. The result is shown in Table 7.

### (Stability of aqueous adherence adhesive composition)

The aqueous adherence adhesive compositions prepared in Examples and Comparative Examples were further adjusted to a pH of 8 and a non-volatile content of 30 % with 28 % aqueous ammonia solution, then Maron stability test was carried out and the generation rate (%) of a coagulated article = (a coagulated article/initial solid content) × 100 was calculated. The condition of the Maron stability test was a load of 10 kg, a rotational number of 1000 rpm and a shear time of 10 min. The result is shown in Table 7.

### Evaluation criteria

○: The generation rate of coagulated article was at most 0.7 %.
Δ: The generation rate of coagulated article exceeded 0.7 % and was less than 1.0 %.
× : The generation rate of coagulated article was at least 1.0 %.

**TABLE 7**

| | Holding power (mm) | Adhesive force (N/25 mm) | Weight reduction by heating (%) | Stability |
|---|---|---|---|---|
| Ex. 6* | 0.0 | 7.2 | 0.3 | ○ |
| Ex. 7 | 0.0 | 6.5 | 0.2 | ○ |
| Ex. 8 | 0.0 | 6.2 | 0.2 | ○ |
| Ex. 9 | 0.0 | 6.4 | 0.1 | ○ |
| Ex. 10 | 0.0 | 6.0 | 0.1 | ○ |
| Com. Ex. 7 | 0.0 | 7.0 | 0.5 | ○ |
| Com. Ex. 8 | 0.2 | 6.5 | 0.5 | × |
| Com. Ex. 9 | 0.0 | 6.9 | 0.3 | × |
| Com. Ex. 10 | 0.3 | 6.5 | 0.7 | ○ |
| Com. Ex. 11 | 0.5 | 5.8 | 0.8 | ○ |
| Com. Ex. 12 | 1.5 | 4.5 | 1.2 | ○ |
| Com. Ex. 13 | 0.0 | 4.0 | 0.4 | ○ |
| Com. Ex. 14 | 0.0 | 1.5 | 0.4 | ○ |

| | | | | |
|---|---|---|---|---|
| * Reference Example | | | | |

### INDUSTRIAL APPLICABILITY

An adherence adhesive composition or an aqueous adherence adhesive composition having good adhesion performance (in particular, holding power) for all members can be obtained by using the tackifier or tackifier emulsion provided by the present invention. The adherence adhesive composition or the aqueous adherence adhesive composition generates less fumes in comparison with a conventional adherence adhesive composition. Therefore, workability in a drying step of removing moisture from the aqueous adherence adhesive composition and in case of use at high temperature is particularly good.

## Claims

1. An adherence adhesive composition selected from an acryl pressure sensitive adhesive composition, a styrene-conjugated diene block copolymer adherence composition and an ethylene hot melt adhesive, which adherence adhesive composition comprises a tackifier comprising a rosin resin, wherein a ratio of the content of a component with a molecular weight of at most 300 comprised in the rosin resin to the softening point of the rosin resin, that is, the content (% by weight) of a component with a molecular weight of at most 300/softening point (K), is at most 0.004, and wherein
the content of a component with a molecular weight of at most 300 is determined from a value converted to polystyrene and by the summation of the peak area at the lower molecular side than the peak of the unreacted rosin from a value measured by using the gel permeation chromatography (GPC) (trade name: HLC-8120, manufactured by Tosoh Corporation; trade name: TSKgel Super HM-Lx; 3 pieces, manufactured by Tosoh Corporation) and tetrahydrofuran as a solvent,
the softening point is measured in accordance with JIS K 5902,
the content of a component with a molecular weight of at most 300 is at most 1.5% by weight,
and the rosin resin is an esterified product of rosins and alcohols.

2. The adherence adhesive composition of Claim 1, wherein the softening point of the rosin resin is 360 to 450K.

3. The adherence adhesive composition of either of claim 1 or 2, wherein the flash point of the tackifier, which is measured by a Cleveland open cup flash point measurement device in accordance with JIS K 2265, is at least 300°C.

4. The adherence adhesive composition of any one of claims 1 to 3, wherein the tackifier shows a temperature of 2% weight reduction by heating of at least 270°C and 5 % weight reduction by heating of at least 310°C, wherein the temperature of weight reduction by heating is the temperature at which the weight of a sample is respectively reduced by 2% and 5% at measuring the weight of the sample of 10 mg at a measurement temperature of 25 to 400°C and a temperature rising speed of 5°C/min under nitrogen atmosphere by a device for simultaneous measurement of differential heat and weight.

5. The adherence adhesive composition of any one of claims 1 to 4, wherein the rosin resin is an esterified product of rosins and a polyvalent alcohol.

6. The adherence adhesive composition of claim 5, wherein the rosins are polymerized rosin.

7. Use of a rosin resin for a tackifier, wherein a ratio of the content of a component with a molecular weight of at most 300 comprised in the rosin resin to the softening point of the rosin resin, that is, the content (% by weight) of a component with a molecular weight of at most 300/softening point (K), is at most 0.004, and wherein
the content of a component with a molecular weight of at most 300 is determined from a value converted to polystyrene and by the summation of the peak area at the lower molecular side than the peak of the unreacted rosin from a value measured by using the gel permeation chromatography (GPC) (trade name: HLC-8120, manufactured by Tosoh Corporation; trade name: TSKgel Super HM-Lx; 3 pieces, manufactured by Tosoh Corporation) and tetrahydrofuran as a solvent,
the softening point is measured in accordance with JIS K 5902,
the content of a component with a molecular weight of at most 300 is at most 1.5% by weight,
and the rosin resin is an esterified product of rosins and alcohols.

8. A tackifier emulsion, which is obtainable by emulsifying a rosin resin, wherein a ratio of the content of a component with a molecular weight of at most 300 contained in the rosin resin to the softening point of the rosin resin, that is, the content (% by weight) of a component with a molecular weight of at most 300/softening point (K), is at most 0.004, and wherein
the content of a component with a molecular weight of at most 300 is determined from a value converted to polystyrene and by the summation of the peak area at the lower molecular side than the peak of the unreacted rosin from a value measured by using the gel permeation chromatography (GPC) (trade name: HLC-8120, manufactured by Tosoh Corporation; trade name: TSKgel Super HM-Lx; 3 pieces, manufactured by Tosoh Corporation) and tetrahydrofuran as a solvent,
the softening point is measured in accordance with JIS K 5902,
the content of a component with a molecular weight of at most 300 is at most 1.5% by weight,
and the rosin resin is an esterified product of rosins and alcohols.

9. The tackifier emulsion of claim 8, wherein the softening point of the rosin resin is 360 to 450K.

10. The tackifier emulsion of claims 8 or 9, wherein the rosin resin is obtained from the esterified product of rosins and a polyvalent alcohol.

11. The tackifier emulsion of claim 10, wherein the rosins are polymerized rosin.

12. The tackifier emulsion of any one of claims 8 to 11, comprising a polymer emulsifier obtained by polymerizing 10 to 80% by weight of an anionic monomer (A), 10 to 50% by weight of styrenes and/or alkyl (meth)acrylate (B) and 10 to 50% by weight of a reactive emulsifier (C).

13. An aqueous adherence adhesive composition comprising the tackifier emulsion of any one of claims 8 to 12.

14. The adherence adhesive composition of claim 1, wherein the rosin resin is obtainable by a reduced pressure distillation method under heating and reduced pressure, a molecular distillation method, a steam distillation method of blowing heated steam under heating and normal pressure or reduced pressure, or a method of extracting with a solvent dissolving only the component with a molecular weight of at most 300.

## Patentansprüche

1. Eine Haftklebstoffzusammensetzung ausgewählt aus einer Acryl-Pressure-Sensitive-Adhesive-Klebstoffzusammensetzung, einer Styrol-konjugiertes Dien-Blockcopolymer Haftzusammensetzung und einem Ethylen-Schmelzklebstoff, wobei die Haftklebstoffzusammensetzung einen Klebrigmacher umfasst, der ein Kolophoniumharz umfasst, wobei ein Verhältnis des Gehalts einer Komponente mit einem Molekulargewicht von höchstens 300, die im Kolophoniumharz enthalten ist, zum Erweichungspunkt des Kolophoniumharzes, d.h. der Gehalt (Massen-%) einer Komponente mit einem Molekulargewicht von höchstens 300/Erweichungspunkt (K), höchstens 0,004 beträgt,
und wobei der Gehalt einer Komponente mit einem Molekulargewicht von höchstens 300 bestimmt wird aus einem Wert bezogen auf Polystyrol und durch die Addition der Peakfläche auf der niedermolekularen Seite des Peaks des unreagierten Kolophoniums aus einem Wert gemessen unter der Verwendung von Gelpermeationschromatographie (GPC) (Handelsname: HLC-8120, hergestellt von Tosoh Corporation; Handelsname: TSKgel Super HM-Lx; 3 Stück, hergestellt von Tosoh Corporation) und Tetrahydrofuran als ein Lösungsmittel,
der Erweichungspunkt gemäß JIS K 5902 gemessen wird,
der Anteil einer Komponente mit einem Molekulargewicht von höchstens 300 höchstens 1,5 Massen-% beträgt,
und das Kolophoniumharz ein verestertes Produkt aus Kolophonium und Alkoholen ist.

2. Die Haftklebstoffzusammensetzung nach Anspruch 1, wobei der Erweichungspunkt des Kolophoniumharzes 360 bis 450 K beträgt.

3. Die Haftklebstoffzusammensetzung nach einem der Ansprüche 1 oder 2, wobei der Flammpunkt des Klebrigmachers, welcher mit einer Cleveland Flammpunktmessvorrichtung im offenen Tiegel gemäß JIS K 2265 gemessen wird, mindestens 300 °C beträgt.

4. Die Haftklebstoffzusammensetzung nach einem der Ansprüche 1 bis 3, wobei der Klebrigmacher eine Temperatur einer 2%igen Gewichtsreduktion durch Erwärmung von mindestens 270 °C und einer 5%igen Gewichtsreduktion durch Erwärmung von mindestens 310 °C aufweist, wobei die Temperatur der Gewichtsreduktion durch Erwärmung eine Temperatur ist, bei der das Gewicht einer Probe um 2% bzw. 5% bei Messung des Gewichts der Probe von 10 mg bei einer Messtemperatur von 25 bis 400 °C und einer Temperaturanstiegsgeschwindigkeit von 5°C/min unter Stickstoffatmosphäre mit einer Vorrichtung für simultane Messungen von Wärme und Gewicht, reduziert wird.

5. Die Haftklebstoffzusammensetzung nach einem der Ansprüche 1 bis 4, wobei das Kolophoniumharz ein verestertes Produkt von Kolophonium und einem mehrwertigen Alkohol ist.

6. Die Haftklebstoffzusammensetzung nach Anspruch 5, wobei das Kolophonium polymerisiertes Kolophonium ist.

7. Verwendung eines Kolophoniumharzes für einen Klebrigmacher, wobei ein Verhältnis des Gehalts einer Komponente mit einem Molekulargewicht von höchstens 300, die in dem Kolophoniumharz enthalten ist, zum Erweichungspunkt des Kolophoniumharzes, d.h. der Gehalt (Massen-%) einer Komponente mit einem Molekulargewicht von höchstens 300/Erweichungspunkt (K), höchstens 0,004 beträgt, und wobei der Anteil einer Komponente mit einem Molekulargewicht von höchstens 300 bestimmt wird aus einem Wert bezogen auf Polystyrol und durch die Addition der Peakfläche auf der niedermolekularen Seite des Peaks des unreagierten Kolophoniums aus einem Wert gemessen unter der Verwendung von Gelpermeationschromatographie (GPC) (Handelsname: HLC-8120, hergestellt von Tosoh Corporation; Handelsname: TSKgel Super HM-Lx; 3 Stück, hergestellt von Tosoh Corporation) und Tetrahydrofuran als ein Lösungsmittel,
der Erweichungspunkt gemäß JIS K 5902 gemessen wird,
der Anteil einer Komponente mit einem Molekulargewicht von höchstens 300 höchstens 1,5 Massen-% beträgt,
und das Kolophoniumharz ein verestertes Produkt aus Kolophonium und Alkoholen ist.

8. Eine Klebrigmacher-Emulsion, welche erhältlich ist durch Emulgieren eines Kolophoniumharzes, wobei ein Verhältnis des Gehalts einer Komponente mit einem Molekulargewicht von höchstens 300, die im Kolophoniumharz enthalten ist, zum Erweichungspunkt des Kolophoniumharzes, d.h. der Gehalt (Massen-%) einer Komponente mit einem Molekulargewicht von höchstens 300/Erweichungspunkt (K), höchstens 0,004 beträgt,
und wobei der Gehalt einer Komponente mit einem Molekulargewicht von höchstens 300 bestimmt wird aus einem Wert bezogen auf Polystyrol und durch die Addition der Peakfläche auf der niedermolekularen Seite des Peaks des unreagierten Kolophoniums aus einem Wert gemessen unter der Verwendung von Gelpermeationschromatographie (GPC) (Handelsname: HLC-8120, hergestellt von Tosoh Corporation; Handelsname: TSKgel Super HM-Lx; 3 Stück, hergestellt von Tosoh Corporation) und Tetrahydrofuran als ein Lösungsmittel,
der Erweichungspunkt gemäß JIS K 5902 gemessen wird,
der Anteil einer Komponente mit einem Molekulargewicht von höchstens 300 höchstens 1,5 Massen-% beträgt,
und das Kolophoniumharz ein verestertes Produkt aus Kolophonium und Alkoholen ist.

9. Die Klebrigmacher-Emulsion nach Anspruch 8, wobei der Erweichungspunkt des Kolophoniumharzes 360 bis 450 K beträgt.

10. Die Klebrigmacher-Emulsion nach den Ansprüchen 8 oder 9, wobei das Kolophoniumharz aus einem veresterten Produkt aus Kolophonium und einem mehrwertigen Alkohol erhalten wird.

11. Die Klebrigmacher-Emulsion nach Anspruch 10, wobei das Kolophonium polymerisiertes Kolophonium ist.

12. Die Klebrigmacher-Emulsion nach einem der Ansprüche 8 bis 11, welche einen Polymeremulgator erhalten durch Polymerisation von 10 bis 80 Massen-% eines anionischen Monomers (A), 10 bis 50 Massen-% Styrolen und/oder Alkyl (meth)acrylat (B) und 10 bis 50 Massen-% eines reaktiven Emulgators (C), umfasst.

13. Eine wässrige Haftklebstoffzusammensetzung, welche die Klebrigmacher-Emulsion nach einem der Ansprüche 8 bis 12 umfasst.

14. Die Haftklebstoffzusammensetzung nach Anspruch 1, wobei das Kolophoniumharz erhältlich ist durch ein Destillationsverfahren mit vermindertem Druck unter Erwärmung und vermindertem Druck, ein molekulares Destillationsverfahren, ein Dampfdestillationsverfahren durch Einblasen von heißem Dampf unter Erwärmung und Normaldruck oder vermindertem Druck, oder ein Verfahren durch Extraktion mit einem Lösungsmittel, welches nur die Komponente mit einem Molekulargewicht von höchstens 300 löst.

## Revendications

1. Composition adhésive d'adhésion choisie parmi une composition adhésive acrylique sensible à la pression, une composition d'adhésion à base de copolymère à blocs de styrène et de diène conjugué, et un adhésif thermofusible à base d'éthylène, laquelle composition adhésive d'adhésion comprend un agent tackifiant comprenant une résine de colophane, dans laquelle le rapport de la teneur en un composant ayant une masse moléculaire d'au plus 300 compris dans la résine de colophane au point de ramollissement de la résine de colophane, c'est-à-dire la teneur (% en poids) en un composant ayant une masse moléculaire d'au plus 300 / le point de ramollissement (K), est d'au plus 0,004, et dans laquelle
la teneur en un composant ayant une masse moléculaire d'au plus 300 est déterminée à partir d'une valeur convertie en polystyrène et par la somme des aires de pics du côté des masses moléculaires plus faibles que le pic de la colophane n'ayant pas réagi à partir d'une valeur mesurée par utilisation d'une chromatographie par perméation de gel (GPC) (marque déposée : HLC-8120, fabriquée par Tosoh Corporation ; marque déposée : TSKgel Super HM-Lx ; 3 pièces, fabriquées par Tosoh Corporation) et de tétrahydrofurane en tant que solvant,
le point de ramollissement est mesuré conformément à la nonne JIS K 5902,
la teneur en un composant ayant une masse moléculaire d'au plus 300 est d'au plus 1,5 % en poids,
et la résine de colophane est un produit estérifié de colophanes et d'alcools.

2. Composition adhésive d'adhésion selon la revendication 1, dans laquelle le point de ramollissement de la résine de colophane est de 360 à 450 K.

3. Composition adhésive d'adhésion selon l'une ou l'autre des revendications 1 et 2, dans laquelle le point éclair de l'agent tackifiant, qui est mesuré par un dispositif de mesure de point éclair à coupelle ouverte Cleveland conformément à la norme JIS K 2265, est d'au moins 300 °C.

4. Composition adhésive d'adhésion selon l'une quelconque des revendications 1 à 3, dans lequel l'agent tackifiant présente une température de réduction de poids de 2 % par chauffage d'au moins 270 °C, et de réduction de poids de 5 % par chauffage d'au moins 310 °C, et dans laquelle la température de réduction de poids par chauffage est la température à laquelle le poids d'un échantillon est respectivement réduit de 2 % et 5 % lors d'une mesure du poids de l'échantillon de 10 mg à une température de mesure de 25 à 400 °C et à une vitesse de montée en température de 5 °C/min dans une atmosphère d'azote au moyen d'un dispositif pour mesurer simultanément le différentiel de chaleur et le poids.

5. Composition adhésive d'adhésion selon l'une quelconque des revendications 1 à 4, dans laquelle la résine de colophane est un produit estérifié de colophanes et d'un alcool polyvalent.

6. Composition adhésive d'adhésion selon la revendication 5, dans laquelle les colophanes sont constituées de colophane polymérisée.

7. Utilisation d'une résine de colophane pour un agent tackifiant, dans laquelle le rapport de la teneur en un composant ayant une masse moléculaire d'au plus 300 compris dans la résine de colophane au point de ramollissement de la résine de colophane, c'est-à-dire la teneur (% en poids) en un composant ayant une masse moléculaire d'au plus 300 / le point de ramollissement (K), est d'au plus 0,004, et dans laquelle
la teneur en un composant ayant une masse moléculaire d'au plus 300 est déterminée à partir d'une valeur convertie en polystyrène et par la somme des aires de pics du côté des masses moléculaires plus faibles que le pic de la colophane n'ayant pas réagi à partir d'une valeur mesurée par utilisation d'une chromatographie par perméation de gel (GPC) (marque déposée : HLC-8120, fabriquée par Tosoh Corporation ; marque déposée : TSKgel Super HM-Lx ; 3 pièces, fabriquées par Tosoh Corporation) et de tétrahydrofurane en tant que solvant,
le point de ramollissement est mesuré conformément à la nonne JIS K 5902,
la teneur en un composant ayant une masse moléculaire d'au plus 300 est d'au plus 1,5 % en poids,
et la résine de colophane est un produit estérifié de colophanes et d'alcools.

8. Emulsion d'agent tackifiant, qui peut être obtenue par émulsification d'une résine de colophane, dans laquelle le rapport de la teneur en un composant ayant une masse moléculaire d'au plus 300 compris dans la résine de colophane au point de ramollissement de la résine de colophane, c'est-à-dire la teneur (% en poids) en un composant ayant une masse moléculaire d'au plus 300 / le point de ramollissement (K), est d'au plus 0,004, et dans laquelle
la teneur en un composant ayant une masse moléculaire d'au plus 300 est déterminée à partir d'une valeur convertie en polystyrène et par la somme des aires de pics du côté des masses moléculaires plus faibles que le pic de la colophane n'ayant pas réagi à partir d'une valeur mesurée par utilisation d'une chromatographie par perméation de gel (GPC) (marque déposée : HLC-8120, fabriquée par Tosoh Corporation ; marque déposée : TSKgel Super HM-Lx ; 3 pièces, fabriquées par Tosoh Corporation) et de tétrahydrofurane en tant que solvant,
le point de ramollissement est mesuré conformément à la norme JIS K 5902,
la teneur en un composant ayant une masse moléculaire d'au plus 300 est d'au plus 1,5 % en poids,
et la résine de colophane est un produit estérifié de colophanes et d'alcools.

9. Emulsion d'agent tackifiant selon la revendication 8, dans laquelle le point de ramollissement de la résine de colophane est de 360 à 450 K.

10. Emulsion d'agent tackifiant selon la revendication 8 ou 9, dans laquelle la résine de colophane est obtenue à partir du produit estérifié de colophanes et d'un alcool polyvalent.

11. Emulsion d'agent tackifiant selon la revendication 10, dans laquelle les colophanes sont constituées de colophane polymérisée.

12. Emulsion d'agent tackifiant selon l'une quelconque des revendications 8 à 11, comprenant un émulsifiant polymérique obtenu par polymérisation de 10 à 80 % en poids d'un monomère anionique (A), de 10 à 50 % en poids de styrènes et/ou de (méth)acrylate d'alkyle (B) et de 10 à 50 % en poids d'un émulsifiant réactif (C).

13. Composition adhésive d'adhésion aqueuse comprenant l'émulsion d'agent tackifiant selon l'une quelconque des revendications 8 à 12.

14. Composition adhésive d'adhésion selon la revendication 1, dans laquelle la résine de colophane peut être obtenue par une méthode de distillation sous pression réduite avec chauffage et sous pression réduite, une méthode de distillation moléculaire, une méthode de distillation à la vapeur consistant à insuffler de la vapeur chauffée avec chauffage et sous pression normale ou sous pression réduite, ou une méthode d'extraction avec un solvant dissolvant uniquement le composant ayant une masse moléculaire d'au plus 300.
